# EUROPÄISCHE PATENTSCHRIFT

(11) **EP 1 876 688 B1**
(45) Veröffentlichungstag und Bekanntmachung des Hinweises auf die Patenterteilung: **19.12.2012**
(21) Anmeldenummer: 07107842.2
(22) Anmeldetag: 09.05.2007
(51) Int. Cl.: H02K 11/00

(54) **Schwingfeste Magnetbaugruppe für einen Sensor**
Oscillation-proof magnet assembly for a sensor
Composant magnétique résistant aux oscillations pour un capteur

(30) Priorität: 03.07.2006 DE 102006030562
(43) Veröffentlichungstag der Anmeldung: 09.01.2008
(73) Patentinhaber: ROBERT BOSCH GMBH, 70442 Stuttgart (DE)
(72) Erfinder: Wehrle, Andreas, 77770 Durbach (DE)

(56) Entgegenhaltungen:
- DE-A1-102004 027 209
- FR-A- 2 590 746
- FR-A1- 2 771 864
- US-A- 4 329 636
- US-A- 4 857 784
- US-B1- 6 198 185

## Beschreibung

### Stand der Technik

Die vorliegende Erfindung betrifft eine Magnetbaugruppe, welche insbesondere in einer elektrischen Maschine als Sensorbauteil verwendet werden kann, wobei die Magnetbaugruppe für schwingfeste Anwendungen geeignet ist

Magnetbaugruppen für die Anwendung in elektrischen Maschinen sind aus dem Stand der Technik in unterschiedlichen Ausgestaltungen bekannt. Magnetbaugruppen werden beispielsweise für Sensoren verwendet und auf einer Welle einer elektrischen Maschine angeordnet. Derartige Magnetbaugruppen sind dabei Teil eines Sensorsystems, welches ferner eine Sensorik umfasst, um beispielsweise Drehzahl oder Drehrichtung der elektrischen Maschine zu erfassen Aus der DE 10 2004 027 209 A1 ist eine Magnetbaugruppe für eine elektrische Maschine gemäß dem Oberbegriff des Anspruchs 1 bekannt. Diese Magnetbaugruppe ermöglicht die Anordnung mehrerer Magnete, welche an einen Träger mittels eines Federelements verspannt werden. Es hat sich jedoch gezeigt, dass beispielsweise aufgrund von Schwingungen oder Vibrationen, weiche auf die Magnetbaugruppe beispielsweise über die Welle einwirken, Messungenauigheiten des Sensorsystems resultieren können. Insbesondere kann sich ein Abstand in Axialrichtung zwischen einer Sensormagnetoberfläche und einer Sensorik des Sensorsystems verändern. Auch weisen die bekannten Magnetbaugruppen aufgrund ihres Gewichtes gewisse Massenträgheiten auf Ferner treten bei einer Verwendung der Magnetbaugruppe in der Nähe einer elektrischen Maschine auch temperaturbedingte Probleme durch Längenänderungen auf.

### Vorteile der Erfindung

Die erfindungsgemäße Magnetbaugruppe für eine elektrische Maschine mit den Merkmalen des Patentanspruchs 1 weist demgegenüber den Vorteil auf, dass sie gegenüber Schwingungen unempfindlich ist. Ferner weist die erfindungsgemäße Magnetbaugruppe ein besonders geringes Gewicht auf, so dass insbesondere eine Massenträgheit eines Rotors der elektrischen Maschine signifikant reduziert werden kann Erfindungsgemäß können somit einerseits Signale der Magnetbaugruppe genauer sein und andererseits kann ein Sensormagnet trotzdem auf einem großen Wirkdurchmesser bei geringer Massenträgheit angeordnet werden. Dabei ist die erfindungsgemäße Magnetbaugruppe ferner besonders einfach und kostengünstig bereitstellbar. Dies wird erfindungsgemäß dadurch erreicht, dass ein Träger der Magnetbaugruppe aus einem Mehrschichtmaterial mit drei Schichten hergestellt ist. Das Mehrschichtmaterial umfasst dabei eine erste metallische, insbesondere magnetisch leitende Schicht, eine Dämpfungsschicht und eine zweite Schicht, die magnetisch leitend ist. Die Dämpfungsschicht ist dabei zwischen der ersten und zweiten Schicht angeordnet. Durch die Verwendung dieses speziellen Verbundwerkstoffs wird die Masse des Trägers signifikant reduziert. Ferner kann durch die eingebettete Dämpfungsschicht eine ausreichende Schwingungsdämpfung bereitgestellt werden, so dass die Magnetbaugruppe einen extrem ruhigen Lauf aufweist Darüber hinaus kann die erfindungsgemäße Magnetbaugruppe auch eine thermische Abschirmung zwischen einer elektrischen Maschine, insbesondere zwischen Spulen der elektrischen Maschine und einem Arbeitsmagneten der elektrischen Maschine zu einer Sensorik eines Sensorsystems bereitstellen. Insbesondere die Dämpfungsschicht wirkt hierbei thermoisolierend, Hierdurch können auch thermische: Effekte während des Betriebes auf das Sensorsystem reduziert werden. Durch das geringe Gewicht des Trägers kann ferner eine Last auf die Lager der Welle reduziert werden. Es sei angemerkt, dass die Dämpfungsschicht ferner auch Schall dampfen kann. Weiter ist die erste Schicht vorzugsweise Edelstahl.

### Die Unteransprüche zeigen bevorzugte Weiterbildungen der Erfindung

Vorzugsweise sind die erste und zweite Schicht magnetisch leitend und weiter bevorzugt aus dem gleichen Material hergestellt, Als Material für die beiden magnetisch leitenden Schichten wird vorzugsweise ein Blechmaterial verwendet. Das Blechmaterial weist dabei besonders bevorzugt nur eine geringe Dicke auf, z.B. ca. 0.30 mm bis ca. 0.80 mm. Die Dämpfungsschicht weist dabei vorzugsweise eine Dicke auf, welche kleiner als die Dicke der ersten und zweiten Schicht ist. Besonders bevorzugt ist die Dicke der Dämpfungsschicht die Hälfte der Dicke der ersten und zweiten Schichten. Dadurch ist es möglich, einen Träger mit einer Dicke von unter 1 mm bereitzustellen.

Die Dämpfungsschicht ist besonders bevorzugt ein Kunststoff insbesondere ein viskoelastischer Kunststoff. z.B. ein Elastomer Wenn Schwingungen auftreten, kann der Kunststoff die Schwingung aufnehmen und dämpfen.

Gemäß einer weiter bevorzugten Ausgestaltung der Erfindung umfasst der Träger einen hülsenartigen Bereich. Der hülsenartige Bereich ist dabei einstückig mit einem radialen Stützbereich des Trägers gebildet und kann beispielsweise durch Tiefziehen hergestellt werden. Der hülsenartige Bereich ermöglicht insbesondere eine einfache Montage des Trägers beispielsweise auf einer Rotorwelle einer elektrischen Maschine. Hierdurch kann eine einfache und gute Befestigung der Magnetbaugruppe erreicht werden Der Magnetttäger kann dadurch beispielsweise auch mittels einer Presspassung an der Rotorwelle befestigt werden.

Um eine einfache und kostengünstige Verbindung zwischen dem Träger und einem Magnetelement zu ermöglichen, ist das Magnetelement vorzugsweise mittels einer Klebeverbindung am Träger befestigt. Alternativ kann ein Federelement, wie beispielsweise eine Tellerfeder, vorgesehen sein, wobei das Federelement am hülsenartigen Bereich des Trägers angeordnet ist und eine in Axialrichtung des Tragers wirkende Haltckraft auf das Magnetelement ausübt Dadurch kann eine Fixierung des Magnetelements ohne Klebstoff erreicht werden. Es sei ferner angemerkt, dass es jedoch auch möglich ist, zusätzlich noch das Magnetelement auf den Träger aufzukleben, um eine redundante Sicherung zu erhalten.

Gemäß einer weiteren alternativen Art der Befestigung des Magnetelements am Träger weist der Träger vorzugsweise mehrere Ausnehmungen auf, welche zur Fixierung des Magnetelements dienen. Das Magnetelement kann dabei in den Ausnehmungen fixiert werden. Hierzu können beispielsweise Rasteinrichtungen dienen. Die Rasteinrichtungen können einerseits am Magnetelement vorgesehen sein, oder alternativ kann eine Spannscheibe mit Rasteinrichtungen vorgesehen sein, weiche axial auf das Magnetelement aufgebracht wird und in den Ausnehmungen fixiert wird, Die Spannscheibe kann hierbei zusatzlich auch federnde Eigenschaften aufweisen.

Das Magnetelement umfasst vorzugsweise einen ersten Magneten und einen zweiten Magneten. Das Magnetelement kann dabei in Axialrichtung und/oder in Radialrichtung magnetisch wirksam sein. Es sei angemerkt, dass die Anzahl an Magneten auch mehr als zwei sein kann. Beispielsweise kann ein dritter Magnet zur Verwendung als Kodiersignalspur vorgesehen werden.

Es sei ferner angemerkt, dass es grundsätzlich auch denkbar ist, mehr als drei Schichten zu verwenden. Insbesondere können auch weitere Schichten zwischen den beiden äußeren ersten und zweiten Schichten vorgesehen werden, welche unterschiedliche Dämpfungscigensehaften aufweisen Insbesondere können beispielsweise zwei oder drei Dampfungsschichten mit unterschiedlichen Dämpfungseigenschaften zwischen die beiden ersten und zweiten Schichten angeordnet werden.

Die Erfindung betrifft ferner eine elektrische Maschine, insbesondere einen Elektromotor, mit einer erfindungsgemäßen Magnetbaugruppe. Als Elektromotor wird vorzugsweise ein FC -Motor verwendet. Durch die erfindungsgemäße Magnetbaugruppe kann ein derartiger EC-Motor eine signifikant verbesserte Dynamik aufweisen, da insbesondere die Massenträgheiten aufgrund der Magnetbaugruppe reduziert sind. Ferner dient der Träger als eine thermische Abschirmung zwischen einer Abwärme des Stators des EC-Motors und der Sensorik des Sensorsystems. Die erfindungsgemäße Magnetbaugruppe dient insbesondere zur Ermittlung einer Drehzahl und/oder einer Drehrichtung. Die Erfindung kann jedoch auch bei permanent erregten Gleichstrommotoren verwendet werden.

### Zeichnung

Nachfolgend werden bevorzugte Ausführungsbeispiele der Erfindung unter Bezugnahme auf die begleitende Zeichnung beschrieben, In der Zeichnung ist:
- Figur 1: eine schematische Schnittansicht einer Magnetbaugruppe gemäß einem ersten Ausführungsbeispiel der Erfindung.
- Figur 2: eine perspektivische Ansicht der Magnetbaugruppe von Figur 1,
- Figur 3: eine schematische Schnittansicht der Magnetbaugruppe gemäß einem zweiten Ausführungsbeispiel der vorliegenden Erfindung,
- Figur 4: eine perspektivische Ansicht der in Figur 3 gezeigten Magnetbaugruppe,
- Figur 5: eine schematische Schnittansicht einer Magnetbaugruppe gemäß einem dritten Ausführungsbeispiel der vorliegenden Erfindung,
- Figur 6: eine perspektivische Ansicht der in Figur 5 gezeigten Magnetbaugruppe von vorne, und
- Figur 7: eine perspektivische Ansicht der in Figur 5 gezeigten Magnetbaugruppe von hinten

### Bevorzugte Ausführungsformen der Erfindung

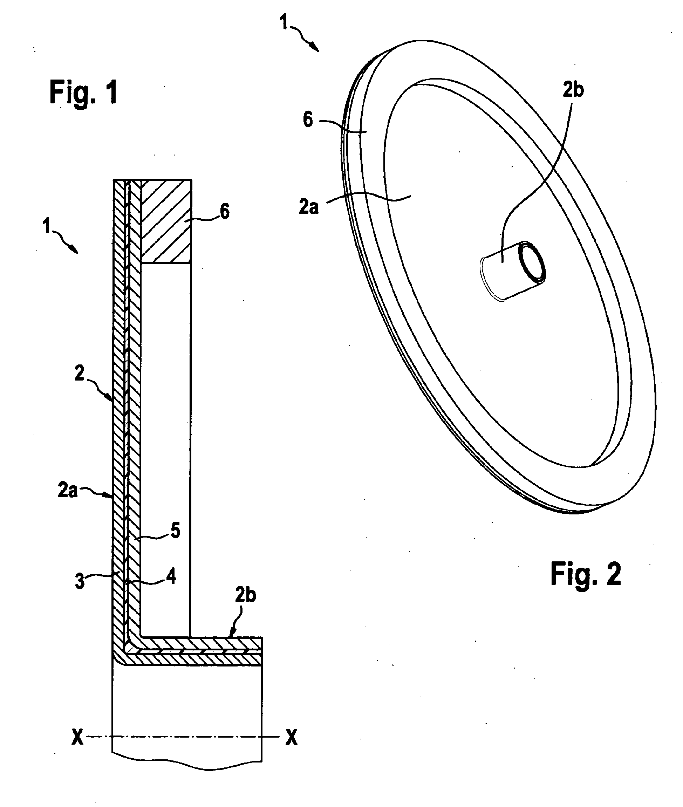

Nachfolgend wird unter Bezugnahme auf die Figuren 1 und 2 eine Magnetbaugruppe 1 gemäß einem ersten Ausführungsbeispiel der Erfindung beschrieben

Wie in Figur 1 gezeigt, umfasst die Magnetbaugruppe 1 einen Träger 2 und ein Magnetelement 6. Der Träger 2 ist aus einem radialen, scheibenförmigen Stützbereich 2a und einem hülsenartigen Bereich 2b gebildet, Der hülsenartige Bereich 2b dient zur Fixierung der Magnetbaugruppe 1 auf einer Rotorwelle eines Elektromotors. Die Fixierung kann beispielsweise durch eine Presspassung erfolgen. Der Träger 2 ist aus einem Verbundmaterial, umfassend eine erste Blechschicht 3, eine zweite Blechschicht 5 und eine Kunststoffschicht 4, hergestellt. Die Kunststoffschicht 4 ist aus einem viskoelastischen Kunststoff gebildet und ist zwischen der ersten Blechschicht 3 und der zweiten Blechschicht 5 angeordnet. Eine Dicke der Kunststoffschicht 4 ist dabei ungefähr halb so groß wie die Dicke der beiden Blechschichten 3, 5 Die Kunststoffschicht weist dämpfende Eigenschaften auf. Die erste Blechschicht 3 und die zweite Blechschicht 5 sind aus dem gleichen Material hergestellt und in diesem Ausführungsbeispiel aus einem Feinblech. Der Träger 2 wird dabei derart hergestellt, dass zuerst ein plattenförmiges Mehrschiebtmaterial hergestellt wird und daraus eine kreisrunde Scheibe ausgestanzt wird, wobei gleichzeitig noch eine Mittenöffnung ausgestanzt wird.

Anschließend wird mittels Tiefzichen der hülsenartige Bereich 2b hergestellt. In Figur 1 kennzeichnet die Linie X-X eine Rotationsachse eines nicht dargestellten Rotors einer elektrischen Maschine.

Die Sandwichbauweise des Trägers 2 ermöglicht es, dass der Träger 2 ein sehr geringes Gewicht aufweist. Das Magnetelement 6 ist dabei ringförmig gebildet und am äußersten Umfangsrand des Trägers 2 angeordnet. Durch die Leichtbauweise des Trägers 2 kann somit insbesondere die Massenträgheit der Magnetbaugruppe reduziert werden Ferner ermöglicht die viskoelastische Kunststoffschicht 4 eine Dämpfung von Schwingungen und Schall Darüber hinaus ermöglicht die Kunststoffschicht 4 eine thermische Isolierung einer gegenüber dem Magnetelement 6 angeordneten Sensorik (nicht dargestellt) eines Sensorsystems, bei welchem die Magnetbaugruppe 1 obenfalls einen Teil darstellt.

Da die Schichten 3 und 5 magnetisch leitend sind, können diese als Rückschluss für das Magnetelement 6 verwendet werden. Für einen magnetischen Rückschluss ist es jedoch ausreichend, wenn nur eine der Schichten magnetisch leitend ist. Die andere Schicht ist dann vorzugsweise aus einem Metall, z B. Edelstahl, hergestellt.

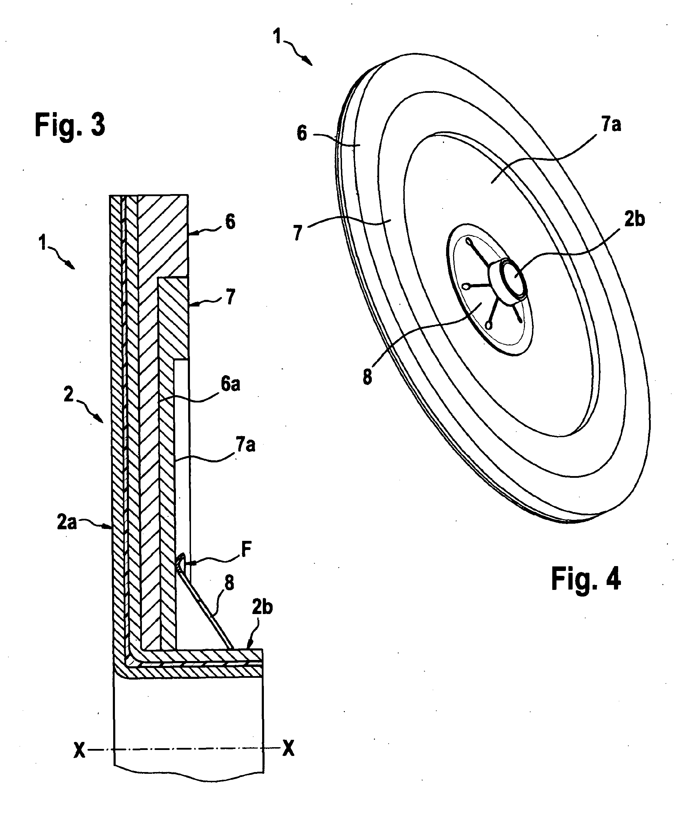

Nachfolgend wird unter Bezugnahme auf die Figuren 3 und 4 eine Magnetbaugruppe 1 gemäß einem zweiten Ausführungsbeispiel der Erfindung beschrieben. Gleiche bzw. funktional gleiche Teile sind mit den gleichen Bezugszeichen wie im ersten Ausfuhrungsbeispiel bezeichnet.

Wie insbesondere in Figur 3 gezeigt, umfasst die Magnetbaugruppe 1 des zweiten Ausführungsbeispiels einen Träger sowie ein erstes Magnetelement 6 und ein zweites Magnetelement 7. Die Magnetelemente weisen jeweils im Wesentlichen eine flächige, kreisförmige Form mit einer mittigen Öffnung auf, wobei an einer Seitenfläche jedes Magnetelements 6,7 eine zur Mittelachse X-X gerichtete ringförmige Ausnehmung 6a bzw. 7a gebildet ist. Wie aus Figur 3 ersichtlich ist, ist in der Ausnehmung 6a des ersten Magnetelements 6 dabei das zweite Magnetelement 7 angeordnet. Die Magnetelemente 6 und 7 weisen dabei im Bereich der Ausnehmungen 6a, 7a jeweils eine geringere Dicke auf.

Wie ferner aus Figur 3 ersichtlich ist, umfasst die Magnetbaugruppe 1 ein Federelement 8. Das Federelement 8 ist, wie in Figur 4 gezeigt, eine Tellerfeder. Das Federelement 8 dient zur Fixierung des ersten Magnetelements 6 und des zweiten Magnetelements 7 am Trager 2. Hierzu ist das Federelement 8 am hülsenartigen Bereich 2b des Trägers 2 befestigt und übt eine Federkraft F in Richtung auf die beiden Magnetelemente 6, 7 aus. Dadurch werden die beiden Magnetelemente 6, 7 gegen den radialen Stützbereich 2a des Trägers 2 gedrückt Somit kann beim zweiten Ausführungsbeispiel auf ein Kleben der Magnetelemente zu deren Befestigung verzichtet werden.

Ansonsten entspricht dieses Ausführungsbeispiel dem ersten Ausführungsbeispiel, so dass auf die dort gegebene Beschreibung verwiesen werden kann.

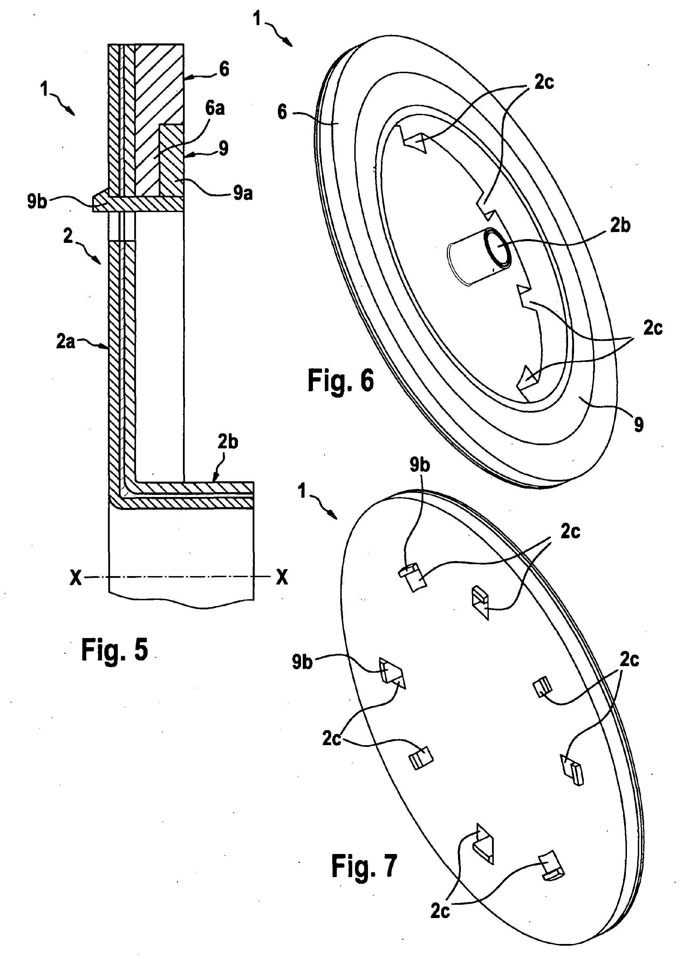

Nachfolgend wird unter Bezugnahme auf die Figuren 5 bis 7 eine Magnetbaugruppe 1 gemäß einem dritten Ausführungsbeispiel der Erfindung beschrieben. Gleiche bzw. funktional gleiche Teile sind dabei mit den gleichen Bezugszeichen wie in den vorhergehenden Ausführungsbeispielen bezeichnet.

Wie aus Figur 5 ersichtlich ist, umfasst die Magnetbaugruppe 1 des dritten Ausführungsbeispiels einen Träger 2 sowie ein Magnetelement 6. Das Magnetelement 6 ist wieder am äußeren Umfang des Trägers 2 angeordnet und weist eine ringförmige nach innen gerichtete Ausnehmung 6a auf. Der Träger 2 ist wieder mit einem radial Stützbereich 2a und einem hülsenartigen Bereich 2b gebildet. Ferner sind im radialen Stützbereich 2a eine Vielzahl von Durchgangsöffnungen 2c, genauer sechs Durchgangsöffnungen 2c, gebildet. Die Magnetbaugruppe 1 des dritten Ausführungsbeispiels umfasst weiter eine Spannscheibe 9. welche zur Fixierung des Magnetelements 6 am Träger 2 dient. Die Spannscheibe 9 umfasst einen ringförmigen Bereich 9a sowie mehrere Rastbereiche 9b. Die Anzahl der Rastbersiche 9b entspricht dabei der Anzahl der Durchgangsöffnungen 2c im Träger 2. Die Rastbereiche erstrecken sich in Axialrichtung X-X der Magnetbaugruppe und weisen an ihrem freien Ende eine Rastnase auf, Mittels der Rastbereiche 9b wird die Spannscheibe 9 am Träger 2 befestigt. Dabei klemmt sie das Magnetelement 6 zwischen sich und den Träger 2, wie in Figur 5 gezeigt. Die Spannscheibe ist beispielsweise aus einem Kunststoff hergestellt und fixiert somit das Magnetelement 6 am Träger 2. Ansonsten entspricht dieses Ausführungsbeispiel den vorhergehenden Ausführungsbeispielen, so dass auf die dort gegebene Beschreibung verwiesen werden kann.

Es sei angemerkt, dass im Rahmen der Erfindung vielfältige Kombinationsmoglichkeiten der dargestellten Ausführungsbeispiele möglich sind. Insbesondere können noch zusätzliche Schichten zwischen die beiden äußeren Blechschichten 3 und 5 angeordnet werden. Ferner ist es immer möglich, dass das bzw, die Magnetelement(e) 6, 7 mittels Kleben befestigt werden bzw zusätzlich gesichert werden.

## Patentansprüche

1. Magnetbaugruppe für eine elektrische Maschine, umfassend einen Träger (2) zur Befestigung auf einer Welle der elektrischen Maschine und wenigstens ein auf dem Träger (2) angeordnetes Magnetelement (6), **dadurch gekennzeichnet, dass** der Träger (2) aus einem Mehrschichtmaterial hergestellt ist, umfassend eine erste Schicht (3) aus metallischem Material, eine Dämpfungsschicht (4) und eine zweite Schicht (5) aus magnetisch leitendem Material, wobei die Dämpfungsschicht (4) zwischen der ersten und zweiten Schicht (3, 5) angeordnet ist.

2. Magnetbaugruppe nach Anspruch 1, **dadurch gekennzeichnet, dass** die erste metallische Schicht (3) aus magnetisch leitendem Material hergestellt ist, und die zweite Schicht (5) aus magnetisch leitendem Material hergestellt ist, wobei insbesondere die erste und zweite Schicht (3, 5) aus dem gleichen Material hergestellt sind.

3. Magnetbaugruppe nach einem der vorhergehenden Ansprüche, **dadurch gekennzeichnet, dass** die Dämpfungsschicht (4) ein Kunststoff, insbesondere ein viskoelastischer Kunststoff, insbesondere ein Elastomer, ist.

4. Magnetbaugruppe nach einem der vorhergehenden Ansprüche, **dadurch gekennzeichnet, dass** der Träger (2) einen radialen Stützbereich (2a) und einen hülsenartigen Bereich (2b) umfasst.

5. Magnetbaugruppe nach einem der vorhergehenden Ansprüche, **gekennzeichnet durch** eine Klebeverbindung zwischen dem Träger (2) und dem Magnetelement (6).

6. Magnetbaugruppe nach Anspruch 4, ferner umfassend ein Federelement (8), welches am hülsenartigen Bereich (2b) des Trägers (2) angeordnet ist und eine in Axialrichtung (X-X) des Trägers wirkende Haltekraft (F) auf das Magnetelement ausübt.

7. Magnetbaugruppe nach einem der vorhergehenden Ansprüche, **dadurch gekennzeichnet, dass** der Träger mehrere Ausnehmungen, insbesondere Durchgangsöffnungen (2c), aufweist.

8. Magnetbaugruppe nach Anspruch 7, **dadurch gekennzeichnet, dass** das Magnetelement (6) mittels Rasteinrichtungen (9b) in den Ausnehmungen des Trägers fixierbar ist.

9. Magnetbaugruppe nach Anspruch 7 oder 8, ferner umfassend eine Spannscheibe (9), um das Magnetelement (6) am Träger (2) zu fixieren.

10. Magnetbaugruppe nach einem der vorhergehenden Ansprüche, **dadurch gekennzeichnet, dass** das Magnetelement wenigstens ein erstes Magnetelement (6) und ein zweites Magnetelement (7) umfasst.

11. Magnetbaugruppe nach einem der vorhergehenden Ansprüche, **dadurch gekennzeichnet, dass** das Magnetelement (6) in Axialrichtung (X-X) und/oder in Radialrichtung des Trägers (2) magnetisch wirksam ist.

12. Magnetbaugruppe nach einem der vorhergehenden Ansprüche, **dadurch gekennzeichnet, dass** die Dämpfungsschicht (4) eine wenigstens erste Schicht und eine zweite Schicht umfasst, wobei die Dämpfungseigenschaften der ersten Schicht unterschiedlich zu den Dämpfungseigenschaften der zweiten Schicht sind.

13. Elektrische Maschine, umfassend eine Magnetbaugruppe nach einem der vorhergehenden Ansprüche.

## Claims

1. Magnet assembly for an electrical machine, comprising a support (2) for fastening on a shaft of the electrical machine and at least one magnet element (6) arranged on the support (2), **characterized in that** the support (2) is produced from a multi-layer material, comprising a first layer (3) made of metallic material, a damping layer (4) and a second layer (5) made of magnetically conductive material, wherein the damping layer (4) is arranged between the first and second layers (3, 5).

2. Magnet assembly according to Claim 1, **characterized in that** the first metallic layer (3) is produced from magnetically conductive material, and the second layer (5) is produced from magnetically conductive material, wherein in particular the first and second layers (3, 5) are produced from the same material.

3. Magnet assembly according to either of the preceding claims, **characterized in that** the damping layer (4) is a plastic, in particular a viscoelastic plastic, in particular an elastomer.

4. Magnet assembly according to one of the preceding claims, **characterized in that** the support (2) comprises a radial supporting region (2a) and a sleeve-like region (2b).

5. Magnet assembly according to one of the preceding claims, **characterized by** an adhesive bond between the support (2) and the magnet element (6).

6. Magnet assembly according to Claim 4, further comprising a spring element (8), which is arranged on the sleeve-like region (2b) of the support (2) and exerts a holding force (F) acting in the axial direction (X-X) of the support on the magnet element.

7. Magnet assembly according to one of the preceding claims, **characterized in that** the support has a plurality of recesses, in particular through-openings (2c).

8. Magnet assembly according to Claim 7, **characterized in that** the magnet element (6) can be fixed in the recesses in the support by means of latching devices (9b).

9. Magnet assembly according to Claim 7 or 8, further comprising a clamping plate (9), in order to fix the magnet element (6) on the support (2).

10. Magnet assembly according to one of the preceding claims, **characterized in that** the magnet element comprises at least a first magnet element (6) and a second magnet element (7).

11. Magnet assembly according to one of the preceding claims, **characterized in that** the magnet element (6) is magnetically active in the axial direction (X-X) and/or in the radial direction of the support (2).

12. Magnet assembly according to one of the preceding claims, **characterized in that** the damping layer (4) comprises at least a first layer and a second layer, wherein the damping properties of the first layer differ from the damping properties of the second layer.

13. Electrical machine, comprising a magnet assembly according to one of the preceding claims.

## Revendications

1. Composant magnétique pour une machine électrique, comprenant un support (2) pour la fixation à un arbre de la machine électrique et au moins un élément magnétique (6) disposé sur le support (2), **caractérisé en ce que** le support (2) est fabriqué à partir d'un matériau multicouche comprenant une première couche (3) en matériau métallique, une couche d'amortissement (4) et une deuxième couche (5) en matériau magnétiquement conducteur, la couche d'amortissement (4) étant disposée entre la première et la deuxième couche (3, 5).

2. Composant magnétique selon la revendication 1, **caractérisé en ce que** la première couche métallique (3) est fabriquée en matériau magnétiquement conducteur, et la deuxième couche (5) est fabriquée en matériau magnétiquement conducteur, la première et la deuxième couche (3, 5) étant notamment fabriquées en le même matériau.

3. Composant magnétique selon l'une quelconque des revendications précédentes, **caractérisé en ce que** la couche d'amortissement (4) est un plastique, en particulier un plastique viscoélastique, notamment un élastomère.

4. Composant magnétique selon l'une quelconque des revendications précédentes, **caractérisé en ce que** le support (2) comprend une région de support radiale (2a) et une région de type douille (2b).

5. Composant magnétique selon l'une quelconque des revendications précédentes, **caractérisé par** une liaison adhésive entre le support (2) et l'élément magnétique (6).

6. Composant magnétique selon la revendication 4, comprenant en outre un élément de ressort (8), qui est disposé sur la région de type douille (2b) du support (2) et qui exerce sur l'élément magnétique une force de retenue (F) agissant dans la direction axiale (X-X) du support.

7. Composant magnétique selon l'une quelconque des revendications précédentes, **caractérisé en ce que** le support présente plusieurs évidements, notamment des ouvertures de passage (2c).

8. Composant magnétique selon la revendication 7, **caractérisé en ce que** l'élément magnétique (6) peut être fixé au moyen de dispositifs d'encliquetage (9b) dans les évidements du support.

9. Composant magnétique selon la revendication 7 ou 8, comprenant en outre un disque de serrage (9), afin de fixer l'élément magnétique (6) sur le support (2).

10. Composant magnétique selon l'une quelconque des revendications précédentes, **caractérisé en ce que** l'élément magnétique comprend au moins un premier élément magnétique (6) et un deuxième élément magnétique (7).

11. Composant magnétique selon l'une quelconque des revendications précédentes, **caractérisé en ce que** l'élément magnétique (6) est magnétiquement actif dans la direction axiale (X-X) et/ou dans la direction radiale du support (2).

12. Composant magnétique selon l'une quelconque des revendications précédentes, **caractérisé en ce que** la couche d'amortissement (4) comprend au moins une première couche et une deuxième couche, les propriétés d'amortissement de la première couche étant différentes des propriétés d'amortissement de la deuxième couche.

13. Machine électrique, comprenant un composant magnétique selon l'une quelconque des revendications précédentes.
